# EUROPEAN PATENT APPLICATION

(11) **EP 0 924 952 A2**
(43) Date of publication of application: **23.06.1999**
(21) Application number: 98204198.0
(22) Date of filing: 10.12.1998
(51) Int. Cl.: H04Q 11/04

(54) **Multi-layered architectures for communications networks**

(30) Priority: 22.12.1997 CA 2225683
(71) Applicant: NORTHERN TELECOM LIMITED, Montreal, Quebec H2Y 3Y4 (CA)
(72) Inventor: Gruber, John G, Orleans, Ontario K1C 2G1 (CA); Allen, Brent E, Nepean, Ontario K2G 6A4 (CA); Guy, John P, Nepean, Ontarion K2H 7J1 (CA)
(74) Representative: Berkson, Michael David

(57) **Abstract**

A layered architecture for a communication network comprises a first layer forming a transport network and a second layer forming a service network. The transport network provides bandwidth management, high capacity and physical layer survivability, and the service network provides switching and routing of the traffic, service layer survivability and other user oriented services. Combination of various technologies such as ATM, or IP over SONET/SDH are considered. A node of such layered networks comprises physically separated transport and service network elements (NE) interfaced to each-other.

## Description

### BACKGROUND OF THE INVENTION

### Field of the Invention

This invention relates to communication networks, and more particularly to communication networks wherein the transport and service infrastructure are physically separated.

### Background Art

Since the introduction of the telegraph in 1850s and telephone networks in 1890s, a large variety of networks dedicated to a single telecommunication service have been developed and deployed over the world. Examples of dedicated networks are the telephone network, the telex network, the CATV network, and packet switched networks. Each of these has been designed to meet the technical requirements of a specific service.

In 1984 CCITT adopted the first I-series Recommendations which was a milestone in the development of integrated services digital networks. These Recommendations are concerned with services, network-network interfaces (NNI), user-network interfaces (UNI) and overall network aspects.

The Recommendations define the service bearer as a type of telecommunication service that provides the capability of transmitting signals between UNIs, in other words the service bearers are various forms of transport with attributes defining the capacity, the type of connection and data communication protocols to be used.

OSI (open system interconnection) is a reference model defining a seven-layer framework of protocols for data communications, designed with the purpose to allow any computer anywhere in the world to communicate with any other, as long as they obey the OSI standards. Layering divides the total communications problem into smaller functions, while ensuring independence of each layer from the next layer, by defining services provided by a layer to the next layer, independent of how these services are performed.

The lowest layer is the physical layer, covering the physical interfaces between the devices and is concerned with transmitting raw bits over communication channels, and informing layer two of loss of connectivity. An important task of the data link layer (second layer) is to break data into frames, to then transmit these frames sequentially and, in some cases, to process acknowledgement frames sent back by the receiver. The network layer (the third layer) provides the functional and procedural means to set-up and terminate a call, to route data and to control the data flow across the network. The remaining layers are application oriented, being concerned with providing various service functions to the users, such as session control, network management, and other services.

As such, the basic functions of a network may be divided into two sets of functions, namely transport functions, more or less corresponding to layers 1 and 2 of the OSI model, and service functions corresponding to layers 3-7.

Some network elements (NEs) currently in use are designed to provide both transport and service functions, and they are therefore technology-dependent. Functions are allocated in a modular fashion for the communication protocol, as per OSI layers. Such NEs are for example ATM switches and ATM cross-connects.

The ATM cross-connection, as defined by standards can be viewed as a service layer function, since the purpose of an ATM cross-connect is to establish fixed service connections, while maintaining their individual quality of service guarantees, which therefore must be known on a per connection basis.

ATM switching is also a service layer function, since its purpose is to set up connections in real-time by end-user signaling. ATM switching is performed through the use of virtual circuit (VC) and virtual path (VP) identifiers contained in the header of an ATM cell. The switch uses routing tables for routing a cell from an input port to an output port according to the VCI/VPI, and also changes the header with the new VC/VP for use by the next switch.

This is unnecessary cost and complexity for the purpose of bandwidth management, which is only concerned with establishing virtual pipes between end-point service devices. At intermediate points, the bandwidth granularity for which an ATM switch is designed is too fine, since the virtual pipes contain bundles of service layer connections, and the knowledge and management of per service layer connection quality of service is complex. Furthermore, in order to be deployed as a transport layer device, the ATM cross-connect must be transparent to the service layer, and it is difficult for an ATM cross-connect to be transparent to switched virtual circuits/paths, and still guarantee the quality of service (QPS).

On the other hand, add, drop and multiplexing of traffic can be viewed as physical layer functions. The add/drop multiplexer (ADM) can multiplex/demultiplex any of its various tributary inputs into/from a line signal and it can be used as a hub, an ADM or a terminal. When used as an ADM, it only accesses signals that need to be dropped or added at that site, the rest of the traffic passes straight through.

As the telecommunications industry is deregulated, network providers may emerge whose services are purely directed to transport layer functions, to service functions, or to both functions. In addition, the overall network may comprise the transport and services of more than one network provider. Furthermore, some technologies may be more appropriately applied at one layer or another, whereas other technologies may be applicable to both layers.

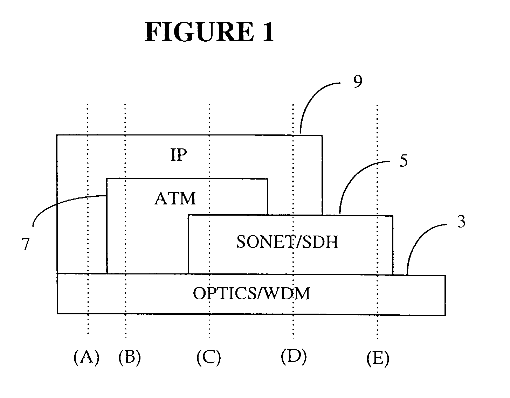

Figure 1 illustrates various technology combinations ranging from single to multiple technology combinations, denoted with (A) to (E). Thus, combination (B) illustrates ATM technology **7** over SONET/SDH technology **5**, and IP technology **9** over ATM technology **7**. IP technology **9** may also be carried directly by SONET/SDH technology **5**, combination shown at (A). The optics/WDM, illustrated at 3, shows the physical medium used for transport, irrespective of the service infrastructure of the signal carried.

A traffic node or NE is defined herein as the equipment at a site that is concerned with both transport and service functions that have to be performed at that node. For example, a repeater or an amplifier are not considered traffic nodes in this invention, they are rather NEs of the transport network only.

SONET/SDH technology is optimized to manage bandwidth at several granularities, for example 1.5Mb/s (VT1.5), 52Mb/s (STS-1) and N x 52Mb/s (STS-Nc). Currently, this technology is used as the transport layer to support more service-oriented technologies. This is because SONET/SDH complies with the requirements for a transport layer, as per the OSI first and second layers.

As also shown in Figure 1 at **7**, ATM can be built on the optics/WDM **3** and also on SONET/SDH technology **5**. ATM is a technology which has functions that are applicable to both the service layer and the transport layer. Much of the focus on ATM over the last 10 or so years, has been on its potential to provide a network infrastructure that can handle a wide variety of services including voice, video and data. Thus, the focus has been on a multi-service infrastructure and considerable complexity has been allowed in ATM to achieve the service layer values. As such, ATM is a good candidate for the service layer technology.

However, since ATM has also functions applicable to the transport layer, it is important when designing or deploying network elements, to distinguish between the functions that are important for service layer devices and those that are important for transport layer devices. Service layer functions are usually justified based on revenue potential and may not be cost effectively applied in the transport layer.

Figure 1 also illustrates the Internet Protocol (IP) technology **9**, which can be based on optics/WDM technology **3**, SONET/SDH technology **5**, and ATM technology **7**. IP technology represents the evolution of the consensus of several hardware and software vendors, academic and industrial researchers, and various governmental agencies. One of the defining features of the Internet is to provide network layer services, including protocols for interfacing hosts with the local network, where the protocols depend on the local network used. As such, IP is well suited as a service layer technology.

An ATM network infrastructure on a SONET transport network is analyzed in this specification as an example only. It is to be understood that the same principles may apply to other combinations of transport and service infrastructures.

The SONET/SDH-ATM combination can prove beneficial in reducing ATM switching cost. However, the connection from an end user to an ATM switch may require 10Mb/s, and the connection between two ATM switches may be optimal at 200Mb/s, Since these rates are not available in SONET, the bandwidth of the connection must be under or over provisioned. It is therefore desirable to consider enhancements to the bandwidth management capabilities of SONET, to provide finer bandwidth granularity.

A series of network examples are described next for a better understanding of the basic principle of this invention, for definition of some terms used in this specification, and for showing how bandwidth management differs from service switching.

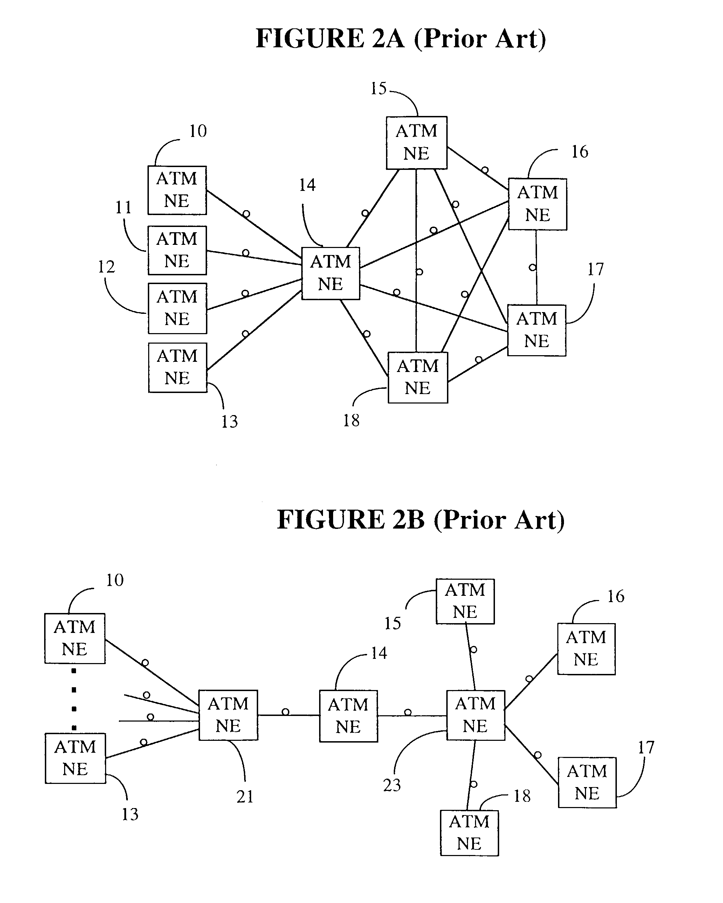

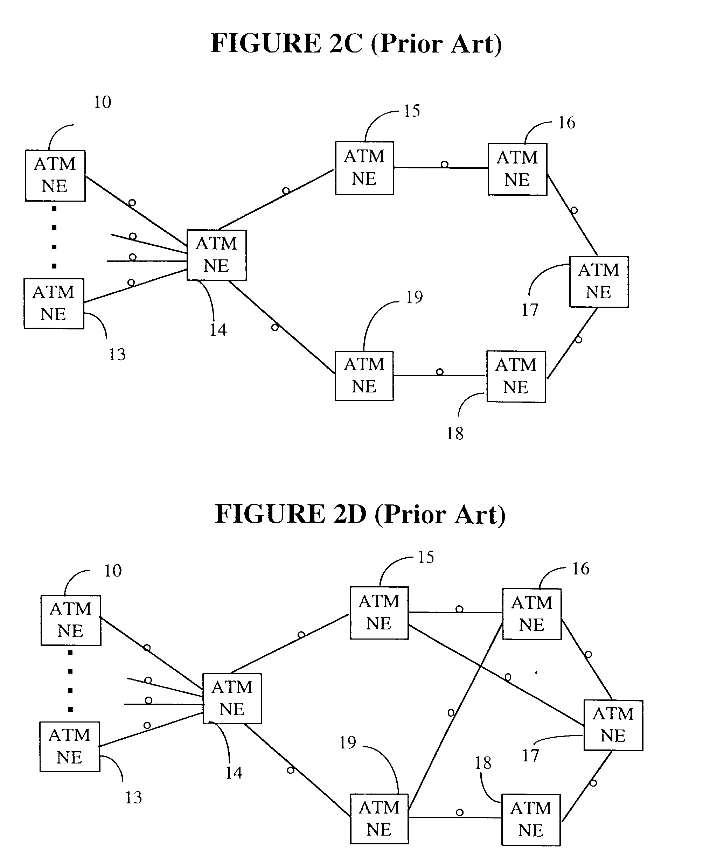

The prior art network configurations analyzed here are: a physical mesh network with edge switching, shown in Figure 2A; a hubbed network with edge and tandem switching, shown in Figure 2B; a physical ring network with consolidated edge and tandem switching, shown in Figure 2C; and a physical partial mesh network, shown in Figure 2D.

In general, NEs within the service layer can be mesh-interconnected at some level to provide any-to-any (full mesh) connectivity, as shown in Figure 2A. Here, ATM NEs **14 - 18** are connected by fiber spans to provide a physical connection, i.e. a physical layer mesh, from every NE to all other NEs. The exception to this is the access network where there may be one NE, in this example NE **14**, that is connected to a number of other NEs, shown at **10 - 13**. To increase the number of network elements in the network shown in Figure 2A by N elements, requires an N² increase in cables and in the total number of ports on the NEs. A NE has a limited number of ports for access and trunking. The approach shown in Figure 2A would rapidly use up ports for trunking, leaving few for revenue-generating access interfaces. For geographically large networks, the architecture shown in Figure 2A also results in excessively high transport cost.

One solution to this problem is to introduce additional layers of switching, as shown in Figure 2B by hub **23**, to provide on-demand interconnection between the lower layers as shown by edge switch **21.** This allows the lower layer NEs to have higher capacity, and more efficiently utilized ports. However, this efficiency comes at the cost of deploying additional service layer NEs **21** and **23.** Although Figure 2B shows a dedicated tandem switch including NEs **21** and **23,** the tandem switching function may be distributed amongst all the other switches, such that they can be physically interconnected in a ring or a partial mesh, as shown in Figures 2C and 2D. Nevertheless, the tandem switching function uses up port and switch capacity that is no longer available for revenue-generating access lines.

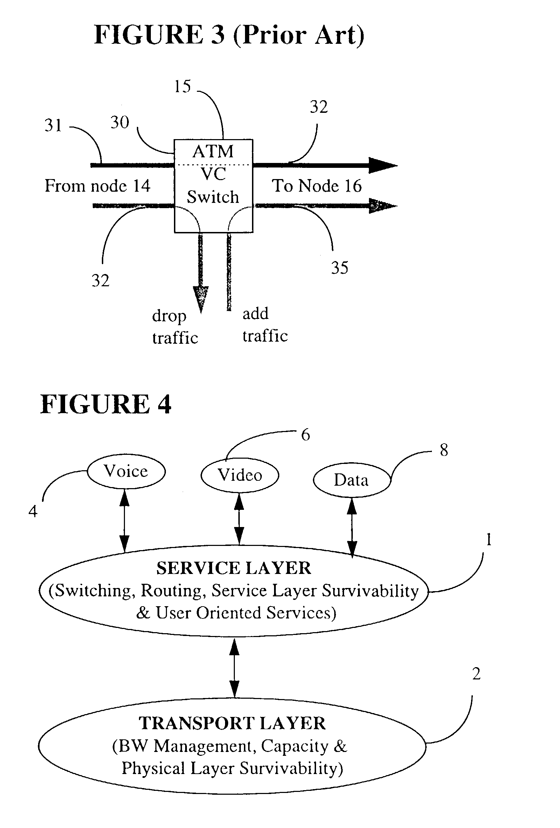

Figure 3 shows a node of a prior art single layered network, such as is node **15** of the network illustrated in Figure 2C. NE **30** in this example is a classic ATM VC switch which performs both service and transport functions. Signal **31**, received from node **14** and illustrated in black lines, transits through switch **30** using relatively expensive switch resources. Signal **32**, also received from node **14** and illustrated in grey lines, is addressed to node **15** and is accordingly processed by switch **30** before it is dropped. In addition, signal **35,** originating at node **15**, is received by switch **30,** processed, and transmitted from node **15** to node **16**, for example.

### SUMMARY OF THE INVENTION

It is a main object of this invention to provide a network architecture that is more flexible and, in some cases, less expensive than the solutions currently used.

It is another object of the present invention to provide a method of associating functions with different layers, thus creating a layered network.

Another object of the invention is to provide a communication network that uses separable infrastructures for the transport functions and the service functions.

Accordingly, the invention is directed to a layered architecture for a communication network connecting a plurality (N) of network nodes (NN) comprising a first layer forming a transport network, for physically connecting a subset (K) of network nodes according to a transport protocol, and a second layer forming a service network, for switching and routing traffic between all (N) network nodes according to a service protocol.

The invention is further directed to a network node NN(j) for a layered network architecture comprising a transport network element for receiving passthru traffic and drop traffic from an upstream network node NN(j-1), and transmitting to a downstream node NN(j+1) the passthru traffic and an add traffic originating at the node NN(j), a service network element for receiving and routing the drop traffic to a local user served by the node NN(j), and for assembling the add traffic received from the local user and routing same to the transport network element, and an interface for connecting the transport network element and the service network element.

The invention further includes a network node NN(j) for a layered network architecture comprising, a transport network element for receiving passthru traffic and drop traffic from an upstream network node NN(j-1), and transmitting to a downstream node NN(j+1) the passthru traffic, a service network element for receiving and routing the drop traffic to a local user served by the node NN(j), and an interface for connecting the transport network element and the service network element.

The invention also includes a network node NN(j) for a layered network architecture comprising, a service network element for assembling add traffic received from a local user, a transport network element for receiving the add traffic from the service network element and transmitting same to a downstream node NN(j+1), and an interface for connecting the transport network element and the service network element.

An important advantage of the network architecture of this invention is that it makes less use of expensive service switching or routing resources at the expense of the lower cost transport layer devices. In other words, this invention minimizes the tandeming of traffic through service resources by using transport layer devices.

### BRIEF DESCRIPTION OF THE DRAWINGS

The foregoing and other objects, features and advantages of the invention will be apparent from the following more particular description of the preferred embodiments, as illustrated in the appended drawings, where:
**Figure 1** illustrates the relationships between various technologies and service / transport layer pair examples;
**Figure 2A** illustrates a physical mesh network with edge switching;
**Figure 2B** shows a hubbed network with edge and tandem switching;
**Figure 2C** shows a physical ring network with distributed edge and tandem switching;
**Figure 2D** shows a physical partial mesh network with distributed edge and tandem switching;
**Figure 3** shows generically a node with a single layer architecture;
**Figure 4** shows the principle of this invention and the interrelationship between the transport and service layers of a communication network;
**Figure 5A** shows a SONET mesh network with physically separated SONET-to-switch interfaces according to the invention;
**Figure 5B** shows the block diagram of a node of Figure 5A, with no service layer grooming;
**Figure 5C** shows the block diagram of a node of Figure 5A, with service layer grooming;
**Figure 6A** shows a SONET mesh network with edge switching and channellized SONET-to-switch interfaces;
**Figure 6B** shows the block diagram of a node of Figure 6A with no service layer grooming;
**Figure 6C** shows the block diagram of a node of Figure 6A with service layer grooming;
**Figure 7A** shows an enhanced SONET mesh network with edge switching and consolidated SONET-to-switch interfaces;
**Figure 7B** shows the block diagram of a node of Figure 7A;
**Figure 8A** shows a multi-layer architecture IP on ATM on SONET;
**Figure 8B** shows a multi-layer architecture IP and /or ATM on SONET with integrated ATM and/or IP ADM;
**Figure 9A** shows the relative node cost versus transit capacity for comparing a single layer and two layer node architectures;
**Figure 9B** is a graph showing the relative price per unit capacity against capacity for various technologies; and
**Figure 10** is a diagram showing the per node resources for various single and two layer network topologies, versus the number of traffic nodes.

### DESCRIPTION OF THE PREFERRED EMBODIMENT

As seen above, the networks shown in Figures 2A-2D have integrated service and transport interfaces and therefore have no transport bandwidth management. The transport layer in these networks is very simple, consisting of point-to-point fiber connections. The utilization of the cable plant is not optimal for example in Figure 2A, and also survivability issues cannot be as easily addressed for example in Figure 2B.

The present invention proposes to functionally separate the transport and service functions. The functions may be integrated into one network element or included in physically separated transport layer network elements and service layer network elements.

As a result, the architecture of a network can be modelled according to this invention functionally, as having a service layer and a transport layer. This separation into layers is illustrated in Figure 4, where the service layer is referred to by numeral **1**, and the transport layer is referred to by numeral **2**.

As the name implies, the service layer performs the functions necessary to provide service and therefore generate revenue for the carrier. The term 'service' in this specification refers to any application that is using the network, as illustrated by the area **4** showing voice applications, area 6 showing video applications, and area **8** showing data applications.

The primary value of the service layer is switching or routing; however, there are many additional functions that add value, such as quality of service management, selectable or variable bandwidth, calling features, billing, routing around service layer failures that the physical layer is unaware of, etc.

The transport layer **2** provides physical connectivity among network elements within the service layer. The transport layer is part of the cost of providing service and may in fact be shared by several different service infrastructures (e.g. switched 64Kb/s voice, ATM, frame, packet).

The primary values of the transport layer are high capacity/long reach, survivability and bandwidth management.

The traditional role of transport equipment is to interconnect service devices over distance. Transport technology has evolved providing more and more capacity over longer and longer distances to address scarce cable plant and cost.

Survivability is the transport layer function of maintaining up to 100% of traffic in the event of a cable cut or failure of a transport layer network element. As the amount of traffic carried over a single cable increases, the revenue impact of cable cuts or cable interface failures increases. Thus, survivability has become a primary value of the transport layer.

Bandwidth management is a transport layer function concerning the ability of a network to manipulate individual channels within high capacity transmission lines. The benefits of two-layered networks depend on the transport layer providing bandwidth management significantly more cost effectively than the service layer. Overall, there appears to be significant drivers for examining technology combinations that reduce total capital cost relative to using a single higher cost technology.

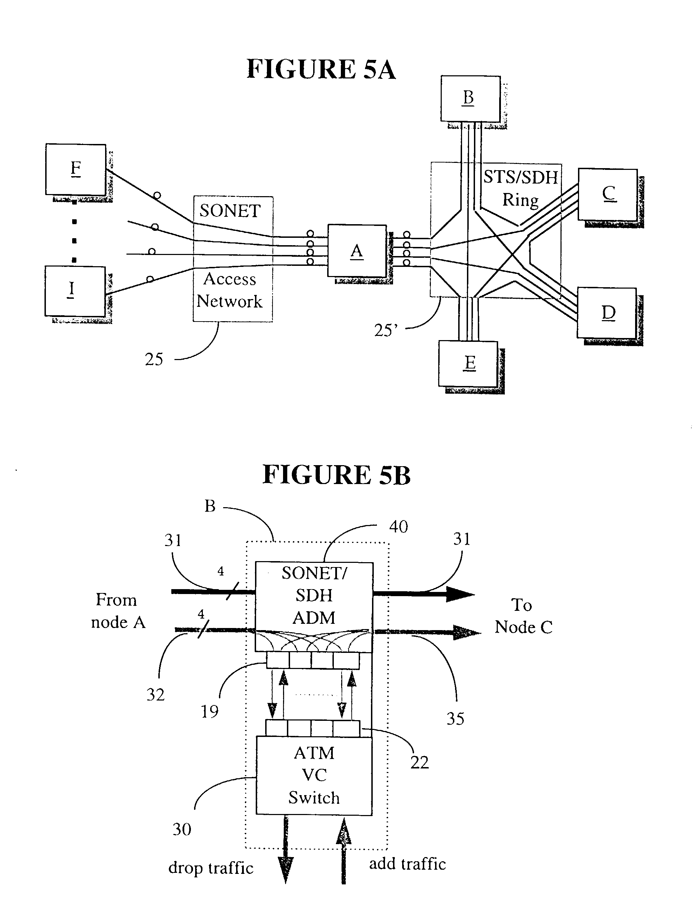

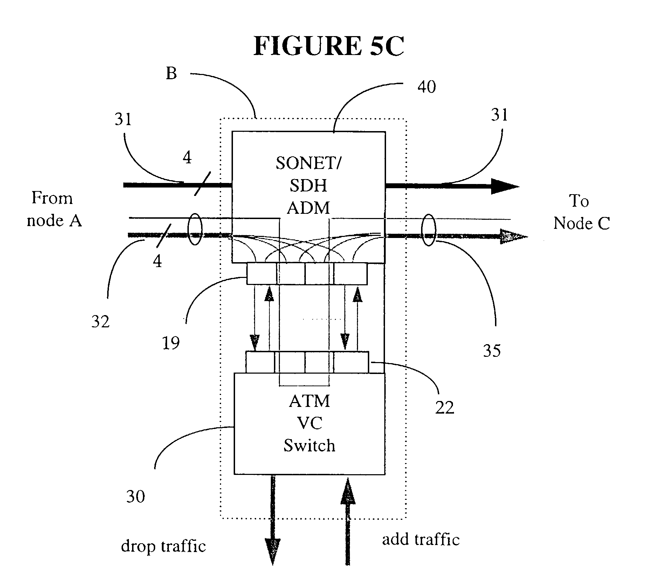

The solution according to this invention may be used in voice networks, especially in ATM networks, where transport NEs are deployed to interconnect the service layer NE ports. The network architectures of Figures 5 to 7 illustrate networks that use the transport layer function of bandwidth management to reduce fiber, switch ports, switch capacity or switch elements. In this specification, the term "local user" designates the equipment served by a network node, which could be an end user or a subtended network.

Figure 5A shows a SONET mesh network with physically separated SONET-to-switch interfaces according to the invention. Each node **A** to **I** of this network comprises a transport and a service NE, as shown by the shadowed areas. The transport NEs are interconnected in the respective SONET/SDH access and transport networks **25** and **25'**, while the service layer ports of the service NEs are interconnected by the ATM service layer, and carried over STS-Nc access network **25** and STS-Nc transport network **25'.** The ATM service layer only switches the traffic that originates and terminates at the respective node **A** to **I**, and the SONET/SDH layer performs an add/drop function at each node, adding and dropping this originating and terminating traffic. The SONET/SDH layer also passes transit traffic through the node via the lower cost SONET/SDH layer, rather than via the higher cost ATM layer.

A node according to the present invention, such as is node B for example, comprises a switch **30** complemented with a lower cost bandwidth management function element **40**, as shown in Figure 5B. Figure 5B shows the block diagram of node B with no service layer grooming, while Figure 5C shows the block diagram of node B provided with service layer grooming. This approach makes better use of fiber and service switching resources at the expense of more transport layer devices. NE **40** is a SONET/SDH ADM which separates the traffic into add and drop traffic for switch **30,** and passthru traffic which transits through node **B** without encountering switch **30.** The advantage of the by-pass switching function at intermediate nodes is driven by two factors, namely (1) the amount of transit traffic passing through these nodes, and (2) the cost of bypassing the switch relative to the cost of transiting through the switch. On the other hand, addition of ADM **40** implies increased costs at node **B**.

In general, there are N-1 ports for an N node network. The example configuration of Figure 5A requires four separate ports, each for a user , and each having a STS-Nc, or STM-Nc granularity. This is intuitively shown on Figure 5B by the four ports on the ADM **40** designated by **19** and the corresponding four ports on the ATM switch **30** designated by **22.**

Unfortunately, the service layer NEs of Figures 5A, 5B and 5C still have separate physical ports for each trunk or access line as they did in the physical layer mesh of Figure 2A. The approach of deploying edge/tandem switches can address the utilization of these ports, but again at the cost of the edge/tandem switching function.

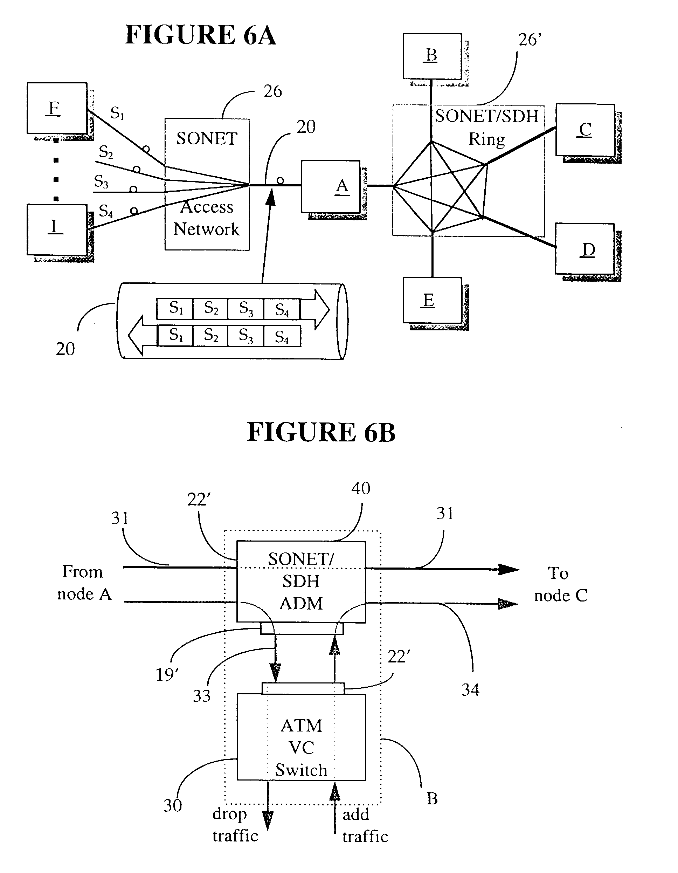

Another option is illustrated in Figures 6A and 6B, which show a SONET mesh network with edge switching and channelized SONET-to-switch interfaces. This configuration shows how ATM NEs can further exploit the bandwidth management capability of the transport networks, by using higher speed channelized ports comprising TDM (time division multiplexed) tributaries that can be manipulated by the transport network. This is illustrated in the "enlarged view" of span **20** where the traffic S₁ to S₄ from/to nodes **F** to **I** is multiplexed/demultiplexed in time so that signals of a finer granularity are presented to node **A**. For example, the access network **26** and the transport network **26'** may have VT/STS-nc (where nc<Nc) bandwidth granularity.

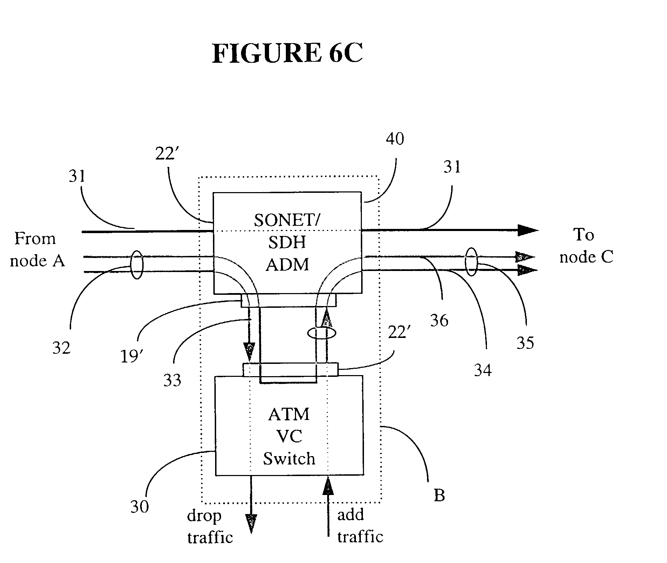

Figure 6B shows the architecture for a node, such as node B of Figure 6A, with channelized interfaces **19'** and **22'** between the transport and the service NEs. There is no service layer grooming performed at node B in Figure 6B; Figure 6C shows the block diagram of node B of Figure 6A with service layer grooming. In Figures 6B and 6C, the traffic input to ADM **40** is treated according to its function and address. Thus, signal **31** bypasses ATM switch **30**, i.e. the service layer, as it is a high fill signal not addressed to node **B**, or not in need of processing at this node. ADM **40** on the other hand routes signal **32** towards ATM switch **30** for processing. Signal **32** comprises a low fill signal **36** which is groomed at switch **30** with service layer information, and also comprises drop signal **33** addressed to the users of node **B**. Furthermore, ADM **40** receives from switch **30** the groomed low fill signal **36** and the add traffic **34** inserted by the users at that node.

Channelized interfaces **19'** and **22'** allow use of a single port. The traffic dropped/added and passedthru may have STS-nc granularity at the interfaces (where nc<Nc).

A limitation of the approach of Figures 6A and 6B is that the granularity of bandwidth management provided by the transport network may not match the connectivity of the service layer NEs. Standard ATM-NEs interfaces (UNI or NNI) currently do not include channelized interfaces, i.e. the interfaces do not consist of TDM tributaries. For example, the OC-3 UNI interface is structured as an STS-3c rather than channelized with three STS-1s.

One way to address this is to enhance the capability of the access and transport networks to provide ATM virtual path (VP) or virtual channel (VC) bandwidth management, as shown in Figure 7A by VP access network **27** and VP transport network **27'**. Figure 7A also shows an "enlarged view" of span **20** for illustrating how the VCs are contained in a VP at the input of node **A**.

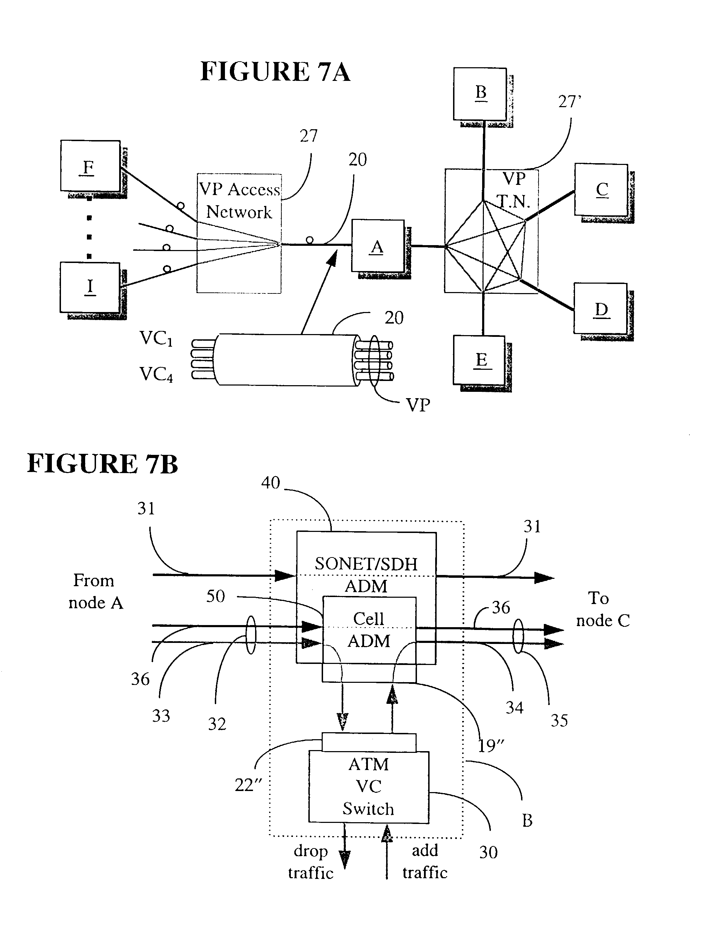

Figure 7B illustrates a two-layer architecture for a node with consolidated interfaces, such as node **B** of the network shown in Figure 7A. Here again the high fill signal **31** bypasses ATM switch **30**, as it is not addressed to it or in need of grooming at node **B**. Now service layer functions for passthru signal **36**, drop signal **33** and add signal **34** are provided by a cell ADM **50**, such that ATM switch **30** only processes the local traffic. This enables consolidated interfaces between the transport ADM and the switch, as shown at **19"** and **22"**.

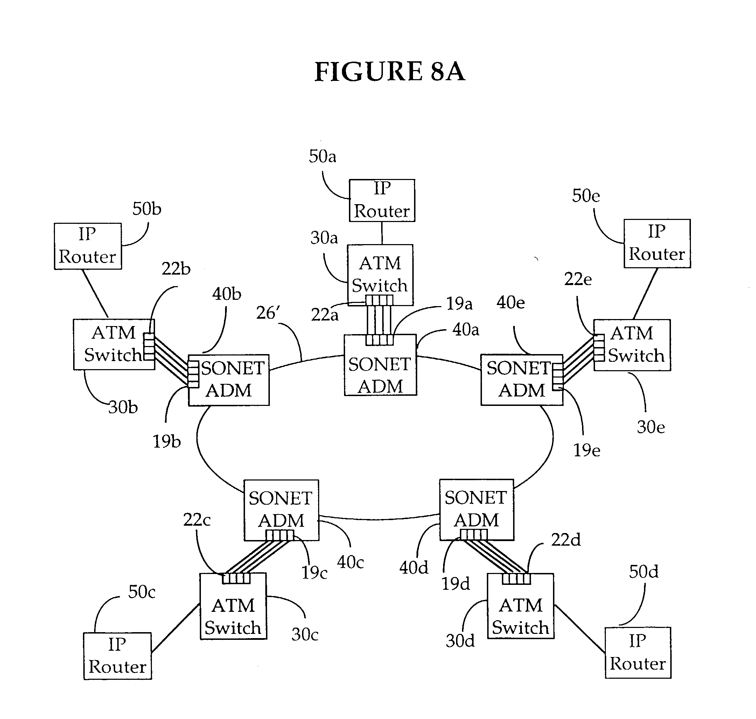

Figure 8A shows a multi-layer architecture, where IP technology is carried on by ATM technology, which in turn uses SONET as the transport layer. This is the scenario shown by section line (C) in Figure 1. In this example, five ADM's **40a-40e** are connected over an OC-N SONET ring **26',** which provides course TDM full or partial mesh connectivity among ATM switches **30a-30e.** Interfaces **22a-22e** on the respective ATM switches **30a-30e**, and the corresponding interfaces **19a-19e** on the respective ADM's **40a-40e** are separate interfaces, as shown in Figure 5A-5C, but also channelized interfaces as shown in Figures 6A-6C at **19'** and **22'** may be used. These interfaces operate at OC-nc rate.

The ATM switches **30a-30e** provide granular full or partial mesh connectivity between the IP routers **50a- 50e.** Interfaces between the ATM switches **30a-30e** and the corresponding IP routers **50a-50e** are OC-nc consolidated interfaces.

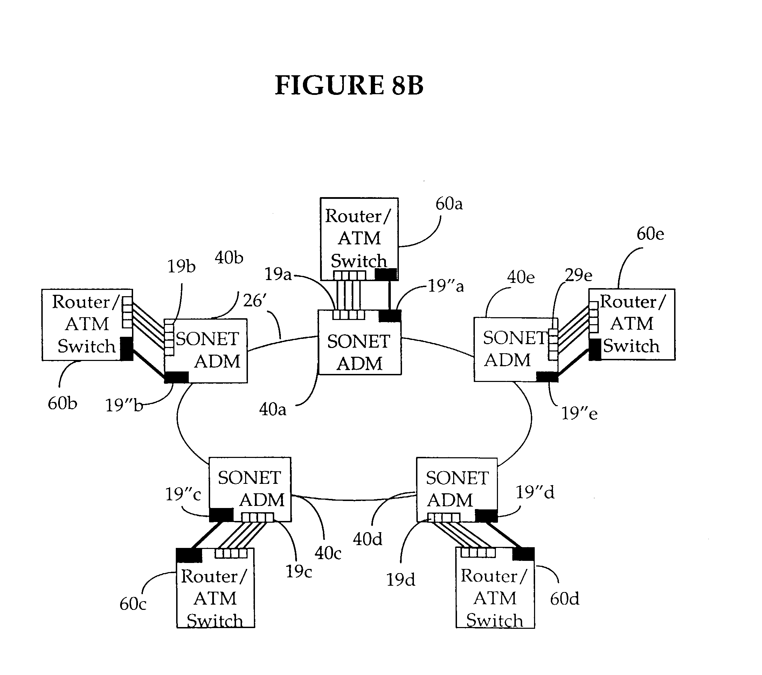

Figure 8B shows a multi-layer architecture IP and/or ATM on SONET with integrated ATM and/or IP ADM. A SONET ring **26'** connects five ADM **40a-40e,** as in Figure 8A. Routers and/or ATM switches, noted with **60a-60e,** are connected each to a respective ADM **40a-40e.** SONET provides course TDM full or partial mesh connectivity among routers and/or ATM switches, for high fill connections. The IP routers or the ATM ADMs (units **60a-60e**) provide granular full or partial mesh connectivity for low/variable fill connections.

In the example shown in Figure 8B, the ADM's are provided with separated interfaces **19a-19e** connected to corresponding interfaces **22a-22e** on the units **60a-60e**. Channelized interfaces **22'** may also be used, to allow use of a single port. The traffic dropped/added and passedthru may have OC-n or OC-nc granularity at these interfaces. Consolidated interfaces **19"a-19"e** are also provided on the respective ADM's **40a-40e** to exchange traffic with the corresponding interfaces **22"a-22"e** on units **60a-60e,** which also work at OC-n or OC-nc rates.

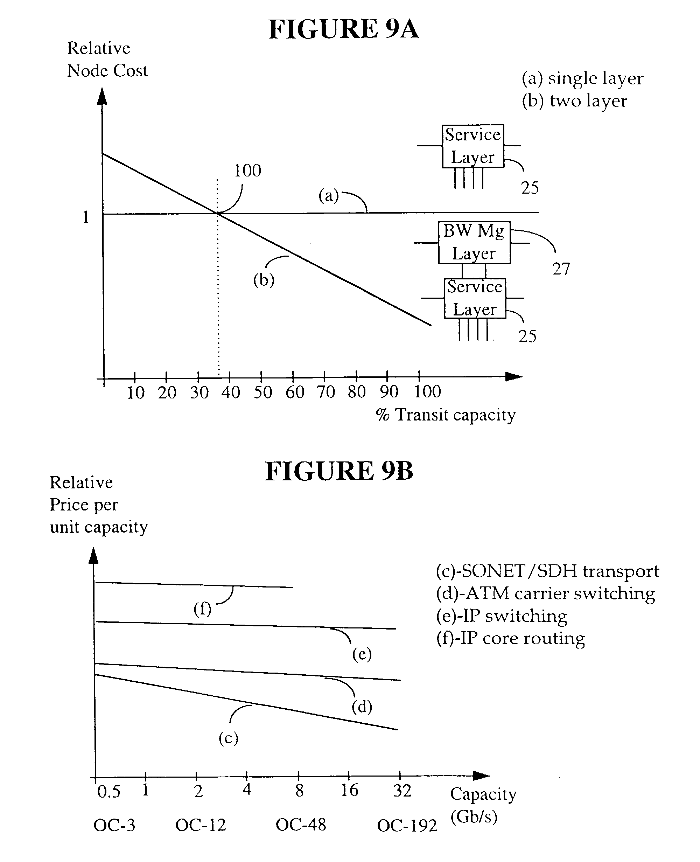

Figure 9A is a graph illustrating the relative node cost versus transit capacity in %, for single layer and two layer architectures. Graph (a) represents the relative node cost to switch the total node capacity for a single layer NE, while graph (b), represents the relative node cost to bandwidth manage the total node capacity and only switch the terminating capacity, for a two layer NE, according to the invention. Total node capacity in Figure 9A comprises the terminating capacity and the transit capacity. The point marked **100** is defined herein as the 'transit capacity breakpoint' above which the two layer advantage is realized.

It is apparent from Figure 9A that, for lower bandwidth management to switching price ratio, the transit capacity breakpoint decreases so that the layered approach has applicability over a wider range of transit capacity. As such, on a nodal basis, there is a two layer advantage if bypass cost is less than switching cost, and if here is sufficient transit traffic. For example, with 30% transit traffic, bypass cost must be less than one third of the switching cost.

Regarding the amount of transit traffic passing through the nodes, the advantage of bypassing switching functions at intermediate locations is in turn driven by mesh-like traffic demand patterns, and by large core networks, that is, networks with long distances and many nodes. Since such networks typically have low connectivity, due to high transport cost for many links, there is considerable tandeming through intermediate nodes to satisfy the mesh demand; in other words there is considerable transit traffic. Indications are that in existing backbone transport networks, transit traffic is about 50%; most of this transit traffic occurs in 50% of nodes, especially in core nodes. Also, IP traffic in router based networks transit many intermediate routers, which implies considerable transit traffic.

Figure 9B illustrates the relative price per unit capacity against relative technology layer pricing for SONET/SDH transport (graph (c)), ATM carrier switching (graph (d)), IP switching (graph (e)), and IP core routing (graph (f)).

Figure 9B suggests that on a price per unit capacity basis (e.g. $K/Gb/s), there are significant price gaps between these technologies. SONET/SDH is considered to be lowest in price, and also to have an economy of scale advantage in that per unit price decreases with higher capacity. Thus, for example, depending on the amount of capacity, SONET/SDH pricing may be about 2 to 3 times lower than ATM pricing. WDM pricing is expected to be even lower than SONET/SDH price and also have more economy of scale. An economy of scale trend with IP and ATM technologies is emerging as high capacity versions of these technologies develop.

Another aspect of economy of scale is the high sharing of fiber and repeaters by high speed transport systems. Thus, an additional driver for a transport layer is higher traffic volume in conjunction with economy of scale, which will result in further relative cost savings as traffic volume increases.

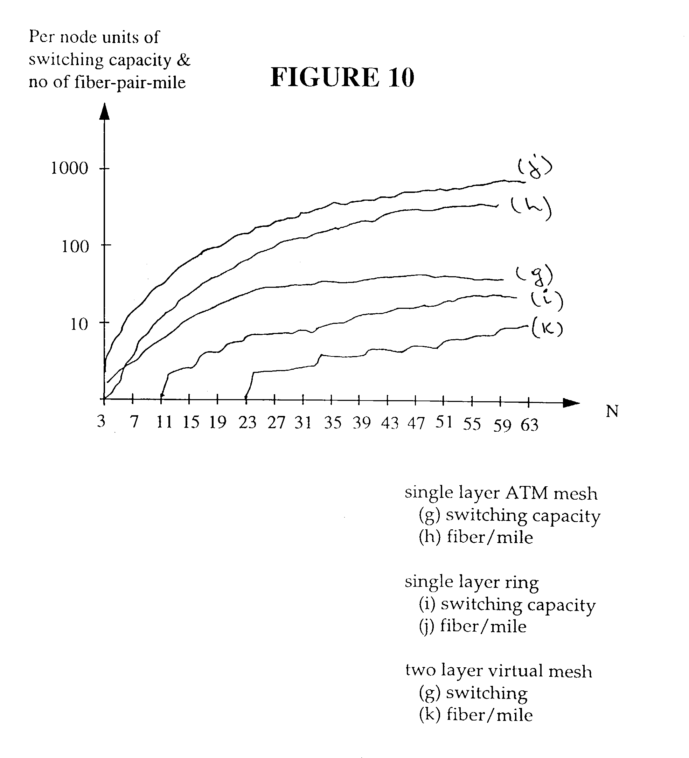

Figure 10 illustrates the two layer advantage in terms of an example of relative network resources needed versus network size given by the number (N) of nodes, for a given demand between all node pairs, and a given distance (d) between nearest nodes. d is also the average link length for the ring topology. For the mesh topology, the average link length is longer, at d(N+2)/4. Similar analysis can be applied to other technology combinations in Figure 1, and to other topologies and demands, such as hubbed.

The single layer ATM mesh topology, such as is the architecture shown in Figure 2A, is a natural fit for mesh demand. Switching capacity, (hence cost) shown by graph (g) of Figure 10 is low, since there is no transit traffic. However, as also shown by graph (h), the mesh topology is penalized by high fiber-pair-miles, which is proportional to N² (where N is the number of nodes) and results in high transport cost. This is especially true for large networks, that is, networks with long distances and with many nodes and links. The mesh topology is also limited by the rather large numbers of switch trunk interfaces. Thus, the role for a single layer ATM mesh topology is in relatively small networks , that is networks with short distances and with few nodes and links.

The single layer ATM ring topology as in Figure 2C minimizes transport cost by consolidating many lower speed links into fewer higher speed links, corresponding to fewer and higher speed switch trunk interfaces as shown in Figure 10 by graph (i). Here the fiber-pair-miles is proportional to N, but the ring is penalized by high switching cost, shown by graph (j), due to considerable transit traffic having to pass through intermediate nodes. Thus, a ring can exemplify a large sparsely connected network with many tandems and high transit traffic. This is roughly indicative of large backbone networks, although such networks would typically have a few additional links and somewhat higher connectivity resulting in a partial mesh topology. As such, a single layer partial mesh topology such as for example the architecture shown in Figure 2B, would lower overall cost by balancing switching and transport cost.

The two layer virtual mesh topology such as illustrated in Figures 5-7, minimize the overall cost by enabling both minimum switching cost and minimum transport cost, as shown by graph (g). Switching capacity is minimized because the SONET/SDH ADM function provides virtual mesh (100%) connectivity which removes all ring transit traffic from the switches. Fiber-pair-miles are minimized as shown by graph (k), by consolidating many lower speed links into even fewer higher speed links; that is, higher speed transport systems can better share fiber than can typically lower speed direct connections between switches.

Other more qualitative drivers for two layer architectures include scalability (1), quality-of-service (QOS) (2), and industry considerations (3).
1. Regarding scalability, this specification assumes no fundamental technological limits to scaling technologies like IP and ATM to higher capacities, but the cost of doing so may be higher than using a complementary lower cost underlying bandwidth management layer to reduce upper layer capacity requirements.
   In this regard, two aspects of scalability are:
   i) the cost of throughput capacity of ATM switch and IP router cores versus cost of throughput capacity for transport, and
   ii) the cost of processing (signaling/connection control for ATM switching, and routing for IP) versus provisioning of transport bandwidth.
   i) This specification has considered the throughput capacity aspect using ATM over SONET/SDH as an example; another current example is IP switching, where ATM relieves IP router capacity. Regarding the throughput capacity aspect of scalability, ATM add /drop or cross-connection has the advantages of more granular bandwidth management than SONET/SDH, and, unlike SONET/SDH, can consolidate traffic at add/drop locations. Therefore, pending price considerations, integration of ATM add/drop or cross-connect functions in SONET/SDH equipment is an implementation option.
   ii) Regarding the processing aspect of scalability, an area of potential value is ATM VC or VP add/drop or cross-connect functions; these functions are presumably lower in price than ATM VC switching because of simpler and slower connection establishment, and in the case of VPs, far fewer
   connections to manage. However, to date these savings have not been quantified.
2. Regarding QOS, the ability to economically scale to high capacities with two layer architectures results in reduced delays, less lost traffic and less unavailability, by relieving congestion. Unavailability is further reduced by a highly survivable transport layer using SONET/SDH rings, and by 1:1 protection switching of ATM switch or cross-connect trunk interfaces.
3. Regarding industry conditions, the viability of two layer architectures depends on the type of carrier and ownership issues. For example, incumbent carriers who have already invested in, and own a transport infrastructure have the flexibility to leverage this investment with a service layer such as ATM; this corresponds to a two layer architecture. This is also consistent with incumbent carriers having more of an infrastructure perspective with high QOS and high survivability being key objectives.

While the invention has been described with reference to particular example embodiments, further modifications and improvements which will occur to those skilled in the art, may be made within the purview of the appended claims, without departing from the scope of the invention in its broader aspect.

## Claims

1. A layered architecture for a communication network connecting a plurality (N) of network nodes (NN) comprising:
a first layer forming a transport network, for physically connecting a subset (K) of network nodes according to a transport protocol; and
a second layer forming a service network, for switching and routing traffic between all (N) network nodes according to a service protocol.

2. A network architecture as claimed in claim 1, wherein said transport protocol manages traffic bandwidth and capacity for said communication network.

3. A network architecture as claimed in claim 2, wherein said transport protocol provides traffic survivability for said communication network.

4. A network architecture as claimed in claim 1, wherein said service protocol provides routing and switching of traffic within said communication network.

5. A network architecture as claimed in claim 1, wherein said transport network is a SONET/SDH network and said service network is an ATM network.

6. A network architecture as claimed in claim 1, wherein said transport network is a SONET/SDH network and said service network is an Internet network.

7. A network architecture as claimed in claim 1, wherein each said network node (NN) comprises:
a transport network element connected into said transport network for providing direct and indirect routes between said (N) network nodes;
a service network element connected into said service network for communicating traffic between said transport element and a local user; and
an interface between said transport and service network elements for translating the format of traffic from/ to said transport protocol to/from said service protocol.

8. A network architecture as claimed in claim 7, wherein said transport network element is a SONET/SDH add/drop multiplexer (ADM).

9. A network architecture as claimed in claim 7, wherein said service network element is an ATM switch.

10. A network architecture as claimed in claim 7, wherein said ADM has a number (M) of network-to-network ports, according to the number (M) of physical connections from an upstream network node NN(j-1) and to a downstream network node NN(j+1).

11. A network architecture as claimed in claim 10, wherein M>1 and each said (M) physical connections transports a STS-Nc/STM-Nc.

12. A network architecture as claimed in claim 10, wherein said interface processes distinctly each said STS-Nc/STM-Nc.

13. A network architecture as claimed in claim 10, wherein M=1 and said physical connection transports a plurality of time division multiplexed (TDM) signals.

14. A network architecture as claimed in claim 10, wherein M=1 and said physical connection transports traffic in a plurality of virtual connections.

15. A network node NN(j) for a layered network architecture comprising:
a transport network element for receiving passthru traffic and drop traffic from an upstream network node NN(j-1), and transmitting to a downstream node NN(j+1) said passthru traffic and an add traffic originating at said node NN(j);
a service network element for receiving and routing said drop traffic to a local user served by said node NN(j), and for assembling said add traffic received from said local user and routing same to said transport network element; and
an interface for connecting said transport network element and said service network element.

16. A network node as claimed in claim 15, wherein said transport network element is a SONET/SDH add/drop multiplexer and said service network element is an ATM switch.

17. A network node as claimed in claim 15, wherein said transport network element is a SONET/SDH add /drop multiplexer and said service network element is an IP router.

18. A network node as claimed in claim 16, wherein said interface comprises a plurality (M) of synchronous ports with STS-Nc/STM-Nc granularity.

19. A network node as claimed in claim 16, wherein said interface comprises a channelized synchronous port with VT/STS-1 granularity.

20. A network node NN(j) as claimed in claim 16, wherein said interface comprises a consolidated port with VC granularity.

21. A network node as claimed in claim 20, wherein said ADM further comprises a cell add/drop multiplexer for receiving said drop traffic from said upstream node NN(j-1), separating same into local traffic and passthru service traffic, and for transmitting said passthru service traffic after grooming with said add traffic to said downstream node NN(j+1).

22. A network node NN(j) for a layered network architecture comprising:
a transport network element for receiving passthru traffic and drop traffic from an upstream network node NN(j-1), and transmitting to a downstream node NN(j+1) said passthru traffic;
a service network element for receiving and routing said drop traffic to a local user served by said node NN(j); and
an interface for connecting said transport network element and said service network element.

23. A network node NN(j) for a layered network architecture comprising:
a service network element for assembling add traffic received from a local user;
a transport network element for receiving said add traffic from said service network element and transmitting same to a downstream node NN(j+1); and
an interface for connecting said transport network element and said service network element.

24. A network architecture as claimed in claim 1, wherein said first layer is a SONET/SDH network, and said second layer comprises an IP network for connecting a plurality of first network elements to each other, and an ATM network for providing fine granularity traffic between said first network elements.

25. A method of operating a communications network by providing a first layer forming a transport network and a second layer forming a service network, according to any of the preceding claims.
